# DEMANDE DE BREVET EUROPEEN

(11) **EP 4 386 718 A1**
(43) Date de publication de la demande: **19.06.2024**
(21) Numéro de dépôt: 23214085.5
(22) Date de dépôt: 04.12.2023
(51) Int. Cl.: G08G 5/06, G08G 5/00

(54) **PROCÉDÉ ET SYSTÈME D AIDE À L ÉVITEMENT D'UNE INCURSION SUR UNE PISTE PAR UN AÉRONEF ROULANT SUR UN AÉRODROME**

(30) Priorité: 16.12.2022 FR 2213611
(71) Demandeur: Airbus Operations SAS, 31060 Toulouse (FR)
(72) Inventeur: CLAUDEL, Emilie, 31060 TOULOUSE (FR); SENTISSI, Isabelle, 31060 TOULOUSE (FR); FAURE, Louise, 31060 TOULOUSE (FR)
(74) Mandataire: Gevers & Orès

(57) **Abrégé**

- Procédé et système d'aide à l'évitement d'une incursion sur une piste par un aéronef roulant sur un aérodrome.
- Le système (1) comprend une unité pour surveiller l'aérodrome (2) de manière à pouvoir détecter, par une détection optique notamment visuelle, un ou plusieurs éléments caractéristiques (C1, C2, C3, C4, C5) comprenant un élément caractéristique (C1) obligatoire correspondant à un marquage d'arrêt au sol, d'un point d'attente (P1, P2, P3) d'une piste (3, 4) de l'aérodrome (2), pour déterminer une position relative courante de l'aéronef (AC) par rapport à un point d'attente (P1, P2, P3) pour lequel au moins l'élément caractéristique (C1) obligatoire a été détecté et pour détecter une entrée future sur la piste (3, 4) de l'aérodrome (2) par l'aéronef (AC), le système (1) comprenant également une unité pour déduire une incursion future si cette entrée future n'est pas autorisée et une unité pour mettre en oeuvre une action destinée à aider à éviter le cas échéant l'incursion future, le système (1) étant configuré pour apporter une aide au pilote de l'aéronef (AC) en améliorant sa sensibilisation concernant une éventuelle incursion sur une piste (P1, P2, P3), au moyen de messages d'alerte et/ou d'aide à la navigation au sol, et en prévoyant une protection en dernier ressort via un freinage automatique.

## Description

### Domaine technique

La présente invention concerne un procédé et un système d'aide à l'évitement d'une incursion sur une piste d'un aérodrome par un aéronef roulant sur l'aérodrome.

### Etat de la technique

Dans le cadre de la présente invention, on entend :
- par piste, une voie de circulation de l'aérodrome (sur laquelle peuvent rouler des aéronefs), qui est destinée spécifiquement au décollage et/ou à l'atterrissage d'aéronefs, appelée plus communément piste de décollage/atterrissage ; et
- par incursion sur une piste, une entrée d'un aéronef, par exemple d'un avion de transport, circulant sur un aérodrome, sur la piste considérée, pour laquelle l'aéronef n'a pas reçu d'autorisation d'entrée de la part des autorités de contrôle aérien (ATC pour « Air Traffic Control » en anglais) de l'aérodrome.

On sait que les avions de transport sont, souvent, équipés d'une fonction d'information des pilotes concernant les pistes, de type « RAAS » (pour « Runway Awareness and Advisory System » en anglais), qui est, généralement, intégrée dans un système évolué d'avertissement de proximité du sol de type EGPWS (pour « Enhanced Ground Proximity Warning System » en anglais). Une telle fonction apporte à l'équipage de l'aéronef une meilleure connaissance de la situation de la piste, permettant de réduire la probabilité d'incidents d'incursion sur une piste en émettant des messages (visuels et sonores) en temps opportun à destination de l'équipage pendant le roulement au sol. Pour ce faire, le système RAAS utilise des données de l'aérodrome, stockées dans une base de données de terrain, couplées à des données issues d'un système de positionnement par satellites de type GPS (pour « Global Positioning System » en anglais) et d'autres capteurs usuels embarqués, pour surveiller le déplacement de l'aéronef sur l'aérodrome. Le système RAAS émet des alertes visuelles et sonores à des positions critiques, par exemple à l'approche d'une piste. Cependant, le système RAAS ne tient pas compte de l'autorisation (donnée, directement et oralement, par le contrôle aérien au pilote de l'aéronef) de pénétrer ou non sur une piste de laquelle s'approche l'aéronef.

Ce système usuel d'aide peut donc encore être amélioré, notamment pour tenir compte d'une erreur ou d'une incapacité du pilote de l'aéronef.

### Exposé de l'invention

Un objectif de la présente invention est d'améliorer l'aide apportée au pilote d'un aéronef pour éviter une incursion sur une piste. Pour ce faire, la présente invention concerne un procédé d'aide à l'évitement d'une incursion sur une piste d'un aérodrome par un aéronef roulant sur l'aérodrome.

Selon l'invention, ledit procédé comporte au moins les étapes suivantes :
- une étape de surveillance, mise en oeuvre par une unité de surveillance, au moins pour surveiller l'aérodrome de manière à pouvoir détecter par l'intermédiaire d'une détection optique, de préférence une détection visuelle, un ou plusieurs éléments caractéristiques comprenant un élément caractéristique obligatoire correspondant à un marquage d'arrêt au sol, ledit ou lesdits éléments caractéristiques étant relatifs à un point d'attente d'une piste de l'aérodrome, pour déterminer une position relative courante de l'aéronef par rapport à un point d'attente pour lequel au moins l'élément caractéristique obligatoire a été détecté, et pour détecter le cas échéant une entrée future sur ladite piste de l'aérodrome par l'aéronef en fonction au moins de cette position relative courante et de paramètres (vitesse, capacité de freinage...) de l'aéronef ;
- une étape de réception de données, mise en oeuvre par une unité de réception de données, au moins pour recevoir au moins une autorisation d'entrée sur une piste ;
- une étape de vérification, mise en oeuvre par une unité de vérification, au moins pour, en cas de détection à l'étape de surveillance d'une entrée future sur ladite piste, vérifier si cette entrée future est autorisée ou non autorisée, en tenant compte de la ou des autorisations d'entrée reçues le cas échéant à l'étape de réception de données, et pour déduire, si cette entrée future n'est pas autorisée, une incursion future ; et
- une étape d'aide à l'évitement, mise en oeuvre par au moins une unité d'aide à l'évitement, au moins pour, dans le cas d'une incursion future déduite à l'étape de vérification, mettre en oeuvre au moins une action destinée à aider à éviter (empêcher) ladite incursion future.

Ainsi, le procédé est en mesure notamment, d'une part de détecter, à l'aide d'une détection optique (précisée ci-dessous) une incursion future (à savoir une entrée future non autorisée), c'est-à-dire une incursion potentielle, sur une piste par l'aéronef (sur lequel est mis en oeuvre ledit procédé), et d'autre part d'apporter une aide au pilote de l'aéronef pour éviter l'incursion dans une telle situation, et ceci en particulier, comme précisé ci-dessous, en améliorant la sensibilisation du pilote concernant la situation effective (à l'aide d'un ou de plusieurs messages d'alerte et/ou d'aide à la navigation au sol) et/ou en prévoyant une protection en dernier ressort (en mettant en oeuvre un freinage automatique) en particulier pour éviter les conséquences que pourraient avoir une erreur ou une incapacité du pilote.

Le procédé est mis en oeuvre lors d'une phase de roulement (« taxiing » en anglais) et/ou lors d'une phase de transition qui de, façon usuelle, est une phase entre d'une part une phase de décollage ou une phase d'atterrissage et d'autre part une telle phase de roulement. De préférence, l'étape de surveillance comprend une étape de traitement de données mise en oeuvre au moins pour déterminer au moins une enveloppe d'alerte courante correspondant à un temps dit d'incursion, et dépendant au moins de ladite position relative courante de l'aéronef et desdits paramètres de l'aéronef, et pour détecter une entrée future sur une piste si l'enveloppe d'alerte courante atteint un point d'attente pour lequel au moins l'élément caractéristique obligatoire a été détecté.

De façon avantageuse, chaque enveloppe d'alerte correspond à un demi-cercle projeté sur le sol à l'avant de l'aéronef, centré sur le nez de l'aéronef et présentant un rayon calculé en fonction du temps d'incursion prédéterminé correspondant, en prenant en compte au moins les paramètres suivants : la position relative de l'aéronef par rapport au point d'attente considéré et lesdits paramètres (vitesse, capacité de freinage, ...) de l'aéronef, et éventuellement un ordre de décélération généré sur l'aéronef.

De préférence, l'étape de traitement de données détermine une pluralité d'enveloppes d'alerte courantes, ces enveloppes d'alerte correspondant à des temps d'incursion différents (relatifs à des niveaux d'alerte différents).

Dans un mode de réalisation particulier, l'étape d'aide à l'évitement émet un premier message d'alerte associé à un premier type d'enveloppe d'alerte si l'enveloppe d'alerte courante correspondante atteint le point d'attente et émet, à la place de ce premier message d'alerte, un second message d'alerte associé à un second type d'enveloppe d'alerte relatif à un niveau d'alerte plus élevé si l'enveloppe d'alerte courante correspondante atteint le point d'attente, le passage de l'émission entre le premier message d'alerte et le second message d'alerte est mis en oeuvre avec un hystérésis.

Avantageusement, l'étape de réception de données comprend au moins l'une des sous-étapes suivantes :
- une sous-étape d'entrée manuelle d'au moins une autorisation d'entrée sur une piste, par un pilote de l'aéronef ; et
- une sous-étape d'entrée automatique d'au moins une autorisation d'entrée sur une piste.

De plus, de façon avantageuse, l'étape de réception de données comprend une sous-étape de détection automatique d'un état allumé d'au moins un indicateur lumineux associé à un marquage d'arrêt au sol d'un point d'attente d'une piste de l'aérodrome.

Dans le cadre de la présente invention, on entend par « détection optique » une détection mise en oeuvre par des moyens et des capteurs optoélectroniques consistant à former des images à partir de la capture d'un rayonnement électromagnétique, par exemple infrarouge ou visible. De préférence, la détection optique est une détection dite visuelle, pour laquelle un rayonnement visible est détecté.

Dans un mode de réalisation préféré, l'étape de surveillance comprend, pour la mise en oeuvre de la détection optique :
- une sous-étape de prise d'images (par exemple dans le visible ou dans l'infrarouge) de l'environnement extérieur de l'aéronef ; et
- une sous-étape de traitement d'au moins certaines des images prises à ladite sous-étape de prise d'images de manière à détecter le cas échéant un élément caractéristique relatif à un point d'attente, lorsque cet élément caractéristique est représenté sur au moins l'une des images traitées.

Avantageusement, la sous-étape de traitement d'images met en oeuvre au moins l'une des techniques suivantes :
- une technique utilisant de l'intelligence artificielle ;
- une technique de traitement d'images.

Dans un mode de réalisation préféré, ledit ou lesdits éléments caractéristiques relatifs à un point d'attente comprennent, en plus de l'élément caractéristique obligatoire, au moins l'un des éléments caractéristiques auxiliaires suivants :
- un marquage au sol ;
- un indicateur lumineux ;
- un marquage ou un panneau d'instructions.

Par ailleurs, avantageusement, l'étape de surveillance comprend une étape de traitement de données mise en oeuvre au moins pour déterminer au moins une enveloppe d'alerte courante, correspondant à un temps dit d'incursion et dépendant au moins de ladite position relative courante de l'aéronef et desdits paramètres de l'aéronef, et pour détecter une entrée future sur une piste si l'enveloppe d'alerte courante atteint un point d'attente pour lequel au moins l'élément caractéristique obligatoire a été détecté.

En outre, de façon avantageuse, l'étape d'aide à l'évitement est mise en oeuvre au moins pour émettre (dans le poste de pilotage de l'aéronef) au moins l'un des messages suivants : un message d'alerte, un message d'aide à la navigation au sol, ledit message étant émis sous au moins l'une des formes suivantes : visuelle, sonore.

De plus, avantageusement, l'étape d'aide à l'évitement est mise en oeuvre au moins pour générer automatiquement un freinage de l'aéronef, au moins en cas d'absence d'action appropriée du pilote après l'émission d'au moins un message.

La présente invention concerne également un système d'aide à l'évitement d'une incursion sur une piste d'un aérodrome par un aéronef roulant sur l'aérodrome.

Selon l'invention, ledit système comporte au moins :
- une unité de surveillance configurée pour surveiller l'aérodrome de manière à pouvoir détecter par l'intermédiaire d'une détection optique un ou plusieurs éléments caractéristiques comprenant un élément caractéristique obligatoire correspondant à un marquage d'arrêt au sol, ledit ou lesdits éléments caractéristiques étant relatifs à un point d'attente d'une piste de l'aérodrome, pour déterminer une position relative courante de l'aéronef par rapport à un point d'attente pour lequel au moins l'élément caractéristique obligatoire a été détecté, et pour détecter le cas échéant une entrée future sur ladite piste de l'aérodrome par l'aéronef en fonction au moins de cette position relative courante et de paramètres de l'aéronef ;
- une unité de réception de données configurée pour recevoir au moins une autorisation d'entrée sur une piste ;
- une unité de vérification configurée pour, en cas de détection par l'unité de surveillance d'une entrée future sur la piste, vérifier si cette entrée future est autorisée ou non autorisée, en tenant compte de la ou des autorisations d'entrée reçues le cas échéant par l'unité de réception de données, et pour déduire, si cette entrée future n'est pas autorisée, une incursion future ; et
- au moins une unité d'aide à l'évitement configurée pour, dans le cas d'une incursion future déduite par l'unité de vérification, mettre en oeuvre au moins une action destinée à aider à éviter ladite incursion future.

De préférence, l'unité de surveillance comprend un dispositif de traitement de données configuré au moins pour déterminer au moins une enveloppe d'alerte courante correspondant à un temps dit d'incursion, et dépendant au moins de ladite position relative courante de l'aéronef et desdits paramètres de l'aéronef, et pour détecter une entrée future sur une piste si l'enveloppe d'alerte courante atteint un point d'attente pour lequel au moins l'élément caractéristique obligatoire a été détecté

La présente invention concerne également un aéronef, en particulier un avion de transport, qui comporte au moins un système d'aide à l'évitement d'une incursion sur une piste, tel que celui décrit ci-dessus.

### Brève description des figures

Les figures annexées feront bien comprendre comment l'invention peut être réalisée. Sur ces figures, des références identiques désignent des éléments semblables.
La figure 1 est un schéma synoptique d'un système d'aide à l'évitement d'une incursion sur une piste, selon un mode de réalisation particulier de l'invention.
La figure 2 est une vue schématique, en perspective, d'une partie d'un aérodrome sur lequel circule un aéronef équipé d'un système d'aide à l'évitement d'une incursion sur une piste.
La figure 3 illustre schématiquement les étapes principales d'un procédé d'aide à l'évitement d'une incursion sur une piste, selon un mode de réalisation particulier de l'invention.
La figure 4 est une vue schématique d'un aéronef vu de dessus, par rapport auquel on a représenté différentes enveloppes dites d'alerte.
La figure 5 montre schématiquement un modèle particulier de marquage d'arrêt au sol.

### Description détaillée

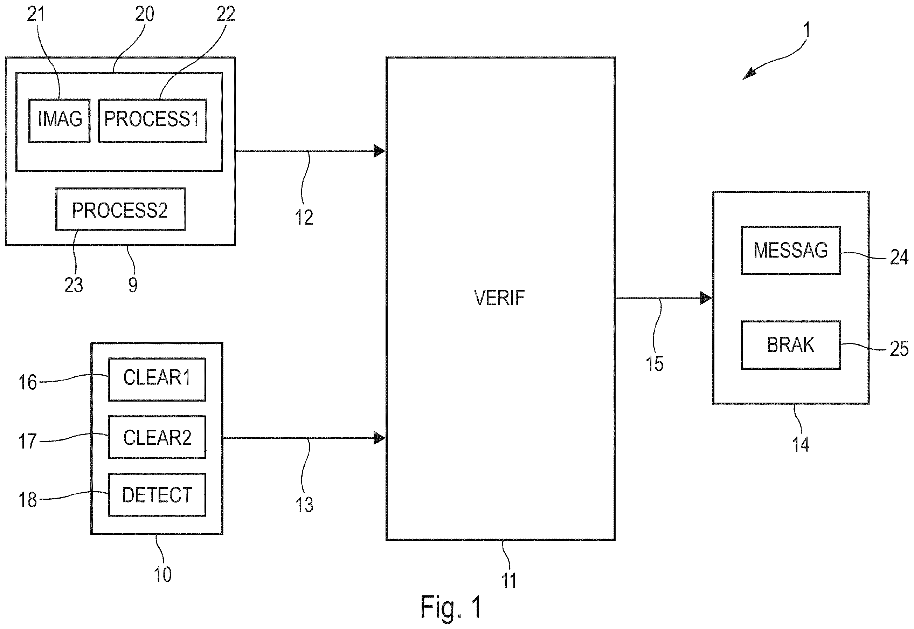

Le système 1, représenté schématiquement sur la figure 1 et permettant d'illustrer l'invention, est destiné à équiper un aéronef AC, en particulier un avion de transport.

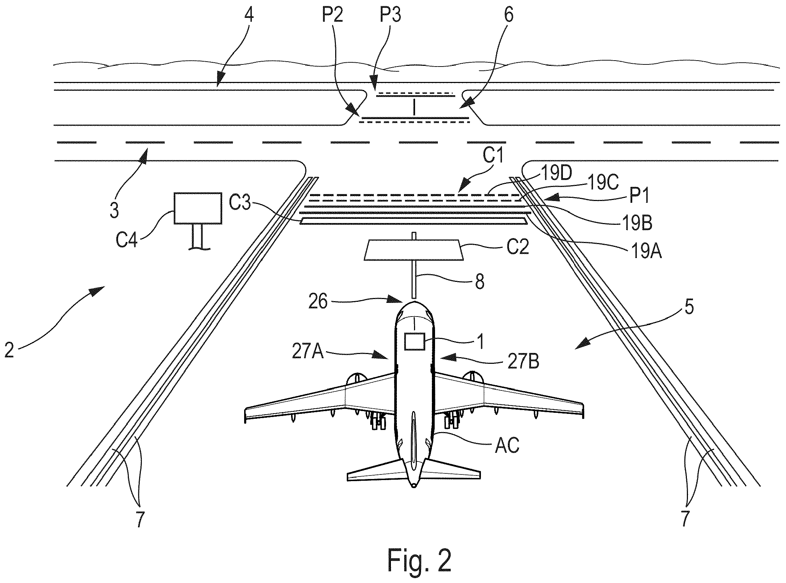

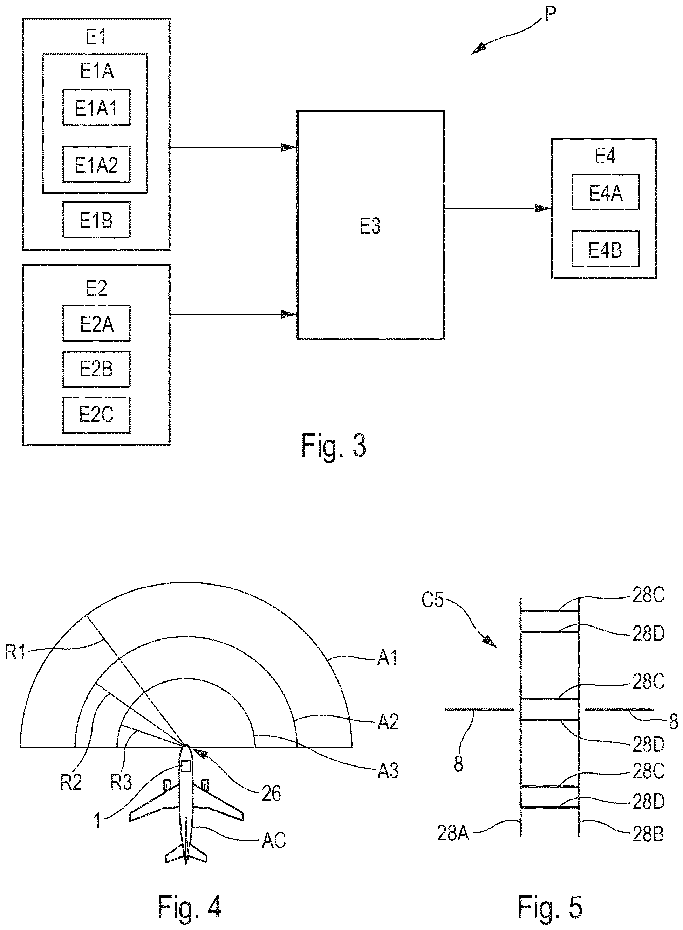

Ce système 1 (qui est embarqué sur l'aéronef AC, comme représenté très schématiquement sur la figure 2 et la figure 4) est destiné à aider l'aéronef AC, lorsqu'il roule sur un aérodrome 2, comme dans l'exemple de la figure 2, à éviter une incursion sur une piste 3, 4 (d'atterrissage et/ou de décollage) de l'aérodrome 2, c'est-à-dire à éviter une entrée non autorisée sur une piste 3, 4 (d'atterrissage et/ou de décollage).

Comme représenté à titre d'illustration sur la figure 2, l'aérodrome 2 comporte des voies de circulation comprenant notamment :
- les pistes 3 et 4 (« runway » en anglais) destinées au décollage et/ou à l'atterrissage des aéronefs ; et
- des voies de roulement 5 et 6 (« taxiway » en anglais) permettant à un aéronef de circuler sur l'aérodrome 2, notamment pour réaliser le trajet (en roulant au sol) entre la piste 3, 4 utilisée pour le décollage ou l'atterrissage et une zone de stationnement (non représentée).

Sur l'exemple de la figure 2, l'aéronef AC roule sur la voie de roulement 5 à destination de la piste 3. La voie de roulement 5 est délimitée latéralement, de part et d'autre, par des lignes 7 doubles de bord de voie, par exemple en jaune, et elle comprend une ligne centrale 8, par exemple également en jaune.

Le système 1 qui est actif pendant les phases de roulement et de transition (précisées ci-dessous) comporte, comme représenté sur la figure 1 :
- une unité de surveillance 9 configurée :
   - pour surveiller l'aérodrome 2 de manière à pouvoir détecter par l'intermédiaire d'une détection dite optique (et notamment une détection visuelle) au moins un élément caractéristique Cn (n étant un entier) relatif à un point d'attente Pi (i étant un entier) d'une piste 3, 4 de l'aérodrome 2 dont au moins un élément caractéristique C1 obligatoire précisé ci-dessous. De façon usuelle, un point d'attente Pi est un point d'une voie de roulement 5, 6 au niveau duquel l'aéronef AC attend (s'arrête) avant d'entrer dans une piste 3, 4 adjacente, comme illustré pour des points d'attente P1, P2 et P3 sur la figure 2 ;
   - pour déterminer une position relative courante de l'aéronef AC (équipé du système 1) par rapport au point d'attente Pi pour lequel un élément caractéristique Cn a été détecté ; et
   - pour détecter le cas échéant une entrée future (ou entrée potentielle, c'est-à-dire une entrée qui aura lieu si, notamment, les conditions courantes de roulement de l'aéronef AC sont conservées), sur ladite piste 3, 4 de l'aérodrome 2 par l'aéronef AC, en fonction de cette position relative courante ainsi déterminée et de paramètres (vitesse, capacité de freinage...) de l'aéronef AC ;
- une unité de réception de données 10 configurée pour permettre au système 1 de recevoir au moins une autorisation d'entrée sur une piste 3, 4 ;
- une unité de vérification 11 (VERIF pour « Vérification unit » en anglais) configurée pour, en cas de détection par l'unité de surveillance 9 (à laquelle elle est reliée par l'intermédiaire d'une liaison 12) d'une entrée future sur une piste, vérifier si cette entrée future est autorisée ou non autorisée, en tenant compte de la ou des autorisations d'entrée reçues le cas échéant par l'unité de réception de données 10 (à laquelle elle est reliée par l'intermédiaire d'une liaison 13), et pour déduire, dans le cas où cette entrée future détectée n'est pas autorisée, une incursion future (ou entrée potentielle non autorisée, c'est-à-dire une entrée non autorisée qui aura lieu si, notamment, les conditions courantes de roulement de l'aéronef AC sont conservées) ; et
- une unité d'aide à l'évitement 14, reliée par l'intermédiaire d'une liaison 15 à l'unité de vérification 11 et configurée pour, dans le cas d'une incursion future déduite par l'unité de vérification 11, mettre en oeuvre au moins une action destinée à aider à éviter (c'est-à-dire à empêcher) ladite incursion future, comme précisé ci-dessous.

L'unité de réception de données 10 comprend au moins l'un des éléments suivants :
- un élément d'entrée (ou de saisie) manuelle 16 (CLEAR1 pour « manual Clearance entry device » en anglais) configuré pour permettre à un pilote de l'aéronef AC d'entrer manuellement dans le système 1 une autorisation (« clearance » en anglais) d'entrer sur une piste, que lui a communiquée le contrôle aérien. L'élément d'entrée manuelle 16 peut correspondre à tout élément permettant au pilote d'entrer des données dans le système 1, tel que par exemple un clavier associé à un écran, un pavé tactile, un écran tactile, ... ; et
- un élément d'entrée automatique 17 (CLEAR2 pour « automatic Clearance entry device » en anglais) configuré pour entrer automatiquement dans le système 1 une autorisation d'entrée sur une piste, comme précisé ci-dessous.

De façon usuelle, une telle autorisation d'entrée sur une piste est accordée par le contrôle aérien de l'aérodrome 2, et elle est généralement transmise via un message vocal au pilote de l'aéronef AC.

De plus, dans un mode de réalisation particulier, l'unité de réception de données 10 comprend également un élément de détection automatique 18 (DETECT pour « automatic Détection device » en anglais). Cet élément de détection automatique 18 est configuré pour détecter automatiquement un état allumé d'au moins un indicateur lumineux relatif à un point d'attente d'une piste de l'aérodrome 2, comme précisé ci-dessous.

Par ailleurs, dans un mode de réalisation préféré, l'unité de surveillance 9 comprend un système de détection optique 20, de préférence à un système de détection visuelle.

Ce système de détection optique 20 comprend, comme représenté sur la figure 1 :
- un dispositif de prise d'images 21 (IMAG pour « Imaging device » en anglais) configuré pour prendre des images de l'environnement extérieur de l'aéronef AC ; et
- un dispositif de traitement d'images 22 (PROCESS1 pour « image Processing device » en anglais) configuré pour traiter au moins certaines des images prises par le dispositif de prise d'images 21 de manière à détecter, le cas échéant, un élément caractéristique Cn (précisé ci-dessous) relatif à un point d'attente Pi, lorsque cet élément caractéristique Cn est représenté sur au moins l'une des images traitées (c'est-à-dire dont une représentation se retrouve sur l'image).

De préférence, le dispositif de prise d'images 21 prend des images dans le visible et le système 20 correspond alors à un système de détection visuelle. En variante, il peut également prendre des images à partir de rayonnements présentant d'autres longueurs d'onde, par exemple dans l'infrarouge.

En outre, le dispositif de traitement d'images 22 met en oeuvre au moins l'une des techniques suivantes, précisées ci-après :
- une technique utilisant de l'intelligence artificielle ;
- une technique de traitement d'images.

Par ailleurs, l'unité de surveillance 9 comprend également un dispositif de traitement de données 23 (PROCESS2 pour « data Processing device » en anglais) configuré pour réaliser divers traitements et calculs précisés ci-dessous.

Dans un mode de réalisation particulier, le dispositif de traitement de données 23 est configuré pour :
- déterminer au moins une enveloppe d'alerte, représentative d'un temps dit d'incursion et dépendant au moins de ladite position relative courante de l'aéronef AC et de paramètres de l'aéronef AC ; et
- détecter une entrée future sur une piste si l'enveloppe d'alerte atteint le point d'attente Pi (pour lequel un élément caractéristique Cn a été détecté).

En outre, l'unité d'aide à l'évitement 14 comprend un dispositif d'émission de message 24 (MESSAG pour « Message emitting device » en anglais). Le dispositif d'émission de message 24 est configuré pour émettre dans le poste de pilotage de l'aéronef AC, à destination du ou des pilotes de l'aéronef AC, un message d'alerte et/ou un message d'aide à la navigation au sol. Le dispositif d'émission de message 24 émet le ou les messages sous forme visuelle et/ou sous forme sonore et/ou sous tout autre forme comme par exemple une stimulation mécanique dans le siège du pilote.

De plus, l'unité d'aide à l'évitement 14 comprend également un dispositif de freinage 25 (BRAK pour « Braking device » en anglais) configuré pour générer automatiquement un freinage de l'aéronef AC, en cas d'absence d'action appropriée du pilote après l'émission d'un message d'alerte par le dispositif d'émission de message 24.

Ainsi, comme cela sera décrit de façon plus détaillée ci-dessous, le système 1 est en mesure, d'une part de détecter une incursion future (c'est-à-dire une entrée future non autorisée) sur une piste 3 par l'aéronef AC équipé du système 1, et d'autre part d'apporter une aide au pilote de l'aéronef AC pour éviter l'incursion dans une telle situation, et ceci en particulier, comme également précisé ci-dessous, en améliorant la sensibilisation du pilote concernant la situation effective (par des messages d'alerte et/ou d'aide à la navigation au sol, émis par le dispositif d'émission de message 24) et/ou en apportant une protection (ou une sécurité) en dernier ressort ou dernier recours (par un freinage automatique mis en oeuvre par le dispositif de freinage 25) notamment en cas d'erreur ou d'incapacité du pilote.

Le système 1, tel que décrit ci-dessus, est destiné à mettre en oeuvre un procédé P d'aide à l'évitement d'une incursion sur une piste d'un aérodrome 2 par un aéronef AC roulant sur l'aérodrome 2 (figure 2), tel que présenté ci-dessous en référence à la figure 3.

Le procédé P comporte les étapes suivantes :
- une étape de surveillance E1, mise en oeuvre par l'unité de surveillance 9, au moins pour surveiller l'aérodrome 2 de manière à pouvoir détecter par l'intermédiaire d'une détection optique au moins un élément caractéristique Cn (dont l'élément caractéristique C1 obligatoire précisé ci-dessous) relatif à un point d'attente Pi d'une piste 3, 4 de l'aérodrome 2. L'étape de surveillance E1 est également mise en oeuvre pour déterminer une position relative courante de l'aéronef AC par rapport à un point d'attente Pi pour lequel l'élément caractéristique C1 obligatoire a été détecté, et pour détecter le cas échéant une entrée future sur ladite piste 3, 4 de l'aérodrome 2 par l'aéronef AC en fonction notamment de cette position relative courante ;
- une étape de réception de données E2, mise en oeuvre par l'unité de réception de données 10, au moins pour recevoir au moins une autorisation d'entrée sur une piste 3, 4 ;
- une étape de vérification E3, mise en oeuvre par l'unité de vérification 11, au moins pour (en cas de détection à l'étape de surveillance E1 d'une entrée future sur une piste 3, 4) vérifier si cette entrée future est autorisée ou non autorisée. Pour ce faire, l'étape de vérification E3 tient compte de la ou des autorisations d'entrée reçues le cas échéant à l'étape de réception de données E2. L'étape de vérification E3 déduit une incursion future si cette entrée future n'est pas autorisée ; et
- une étape d'aide à l'évitement E4, mise en oeuvre par l'unité d'aide à l'évitement 14, au moins pour (dans le cas d'une incursion future déduite à l'étape de vérification E3) mettre en oeuvre au moins une action destinée à aider à éviter (c'est-à-dire à empêcher) ladite incursion future.

L'étape de surveillance E1 et l'étape de réception de données E2 sont mises en oeuvre en continu, lorsque le système 1 est actif et le procédé P est mis en oeuvre, et tant que cela reste le cas.

Quant à l'étape de vérification E3, elle est uniquement mise en oeuvre lorsqu'une entrée future sur une piste 3, 4 a été détectée à l'étape de surveillance E1.

De façon similaire, l'étape d'aide à l'évitement E4 est uniquement mise en oeuvre lorsqu'une incursion future a été déduite à l'étape de vérification E3.

Le système 1 est activé et le procédé P est mis en oeuvre dès que (et uniquement lorsque) l'aéronef AC est dans une phase de roulement de type « taxiing » ou dans une phase de transition. Une phase de transition est, de façon usuelle, une phase de déplacement au sol entre, d'une part une phase de décollage ou une phase d'atterrissage, et d'autre part une telle phase de roulement de type « taxiing ».

Cette activation (du système 1 pour la mise en oeuvre du procédé P) est réalisée automatiquement, le système 1 ayant connaissance de façon automatique et usuelle de la mise en oeuvre d'une phase de roulement ou d'une phase de transition.

Le système 1 est désactivé à la fin de la phase de roulement et/ou de la phase de transition. Cette désactivation est réalisée soit automatiquement, soit manuellement par le pilote en actionnant un élément de désactivation (non représenté) du système 1.

Comme indiqué ci-dessus, les éléments caractéristiques Cn relatifs à un point d'attente Pi comprennent au moins l'élément caractéristique C1 obligatoire. Cet élément caractéristique C1 obligatoire est un marquage d'arrêt au sol. Il est conforme à un modèle A usuel (« pattern A » en anglais) de marquage au sol. Ce modèle A est donc obligatoire pour toutes les pistes telles que les pistes 3 et 4. De façon usuelle, il est formé d'un ensemble comprenant deux segments de droite 19A et 19B et deux lignes 19C et 19D de traits interrompus, parallèles entre eux et orthogonaux à la ligne centrale de la piste considérée (telle que la ligne centrale 8 par exemple), comme représenté à titre d'illustration sur la figure 2 pour la piste 3.

Comme ce marquage d'arrêt au sol (élément caractéristique C1) est obligatoire sur tous les aérodromes, il est privilégié lors de la mise en oeuvre de la présente invention pour détecter un risque d'incursion sur une piste.

On sait par ailleurs qu'il peut exister également, à certains points d'attente Pi, un modèle B usuel (« pattern B » en anglais) de marquage d'arrêt au sol, qui peut également être utilisé comme élément caractéristique par le système 1, tel que l'élément caractéristique C5 représenté à titre d'illustration sur la figure 5. Ce modèle B est complémentaire du modèle A et il est plus éloigné de la piste. Il est utilisé lors d'une approche de précision afin d'éviter toute interférence avec un signal ILS (pour « Instrument Landing System » en anglais) destiné à un atterrissage aux instruments. De façon usuelle, l'élément caractéristique C5 est formé d'un ensemble comprenant deux segments de droite 28A et 28B parallèles entre eux et orthogonaux à la ligne centrale de la piste considérée (telle que la ligne centrale 8 par exemple), et une pluralité de paires de deux segments de droites 28C et 28D parallèles à la ligne centrale et reliant ensemble les segments de droite 28A et 28B, comme représenté sur la figure 5.

Dans un mode de réalisation préféré, ledit ou lesdits éléments caractéristiques Cn relatifs à un point d'attente Pi comprennent également au moins l'un des éléments caractéristiques auxiliaires suivants, comme représenté sur la figure 2 pour le point d'attente P1 :
- un marquage C2 auxiliaire au sol avant le point d'attente P1 ;
- un indicateur lumineux C3 associé au marquage d'arrêt au sol (élément caractéristique C1 obligatoire) du point d'attente P1 ;
- un marquage (au sol) d'instructions ou un panneau d'instructions C4 du point d'attente P1.

Sur la figure 2, on a également représenté, à titre d'illustration :
- un point d'attente P2 destiné à un aéronef roulant sur la voie de roulement 6 avant d'entrer sur la piste 3 ; et
- un point d'attente P3 destiné à un aéronef roulant sur la voie de roulement 6 avant d'entrer sur la piste 4.

Un marquage au sol, tel que le marquage C2, optionnel et supplémentaire, peut également être présent avant le point d'attente et être détecté lors de la mise en oeuvre du procédé P. Ce marquage C2 peut comporter une information telle que le texte suivant « RUNWAY AHEAD » ou « RWY AHEAD » signifiant « piste à l'avant ».

Par ailleurs, les indicateurs lumineux C3 (susceptibles d'émettre une lumière, généralement rouge, lorsqu'ils sont allumés) apportent une information visuelle sur l'autorisation du contrôle aérien d'entrer ou non sur la piste 3 associée. Ils sont positionnés au point d'attente P1 de la piste 3 associée et fonctionnent comme suit :
- lorsque le ou les indicateurs lumineux C3 sont allumés (émission d'une lumière rouge), l'aéronef AC n'a pas l'autorisation d'entrer sur la piste 3 ; et
- lorsque le ou les indicateurs lumineux C3 sont éteints, l'aéronef AC a l'autorisation d'entrer sur la piste 3.

Les indicateurs lumineux, tels que l'indicateur lumineux C3, aux points d'attente ne sont toutefois pas obligatoires sur tous les aérodromes.

Par conséquent, l'absence d'indicateur lumineux allumé ne fournit aucune indication sur une situation potentielle d'incursion sur la piste. En revanche, la détection d'un indicateur lumineux allumé confirme l'absence d'une autorisation du contrôle aérien pour entrer (pénétrer) sur la piste associée.

L'état allumé (lumière rouge) d'un indicateur lumineux C3 est détecté par l'élément de détection automatique 18 du système 1 par l'intermédiaire d'une détection visuelle.

Dans un mode de réalisation préféré, l'élément de détection automatique 18 correspond à l'unité de détection optique 20, et la détection optique (visuelle) de l'indicateur lumineux C3 est mise en oeuvre par cette unité de détection optique 20 (de préférence de la manière décrite ci-dessous en référence à l'étape de détection optique E1A).

Par ailleurs, les panneaux d'instructions de point d'arrêt, tels que le panneau d'instructions C4 de la figure 2, qui comprennent une indication relative à la piste, sont obligatoires sur tous les aérodromes.

La présence de ce type d'éléments caractéristiques peut donc être une confirmation de la présence d'un point d'arrêt. De plus, l'indication sur le panneau d'instructions peut également fournir des informations sur la désignation de la piste et l'emplacement du point d'attente. Ces informations supplémentaires peuvent être utiles pour confirmer que l'aéronef approche bien de la piste 3 considérée.

En cas d'impossibilité d'installer un panneau d'instructions obligatoire, les instructions sont présentées sous forme d'un marquage au sol. De telles instructions de marquage au sol sont également recommandées (mais pas obligatoires) en tant que redondance des panneaux d'instructions obligatoires.

L'autorisation d'entrée sur une piste, donnée par le contrôle aérien (ATC pour « Air Traffic Control » en anglais), doit être connue par le système 1 (et en particulier par l'unité de vérification 11) pour savoir si l'aéronef AC est autorisé ou non à entrer sur une piste. Cette autorisation peut être récupérée par le système 1 de différentes manières, à l'étape de réception de données E2.

Pour ce faire, l'étape de réception de données E2 comprend, tout d'abord, une sous-étape E2A d'entrée manuelle, au cours de laquelle le pilote de l'aéronef entre (insère) manuellement une autorisation (d'entrer sur une piste), dans le système 1, à l'aide de l'élément d'entrée (ou de saisie) manuelle 16. Le pilote entre l'autorisation lorsqu'elle lui a été communiquée par le contrôle aérien à l'approche de la piste considérée.

En variante ou en complément de la sous-étape E2A, l'étape de réception de données E2 comprend une sous-étape E2B d'entrée automatique, mise en oeuvre par l'élément d'entrée automatique 17, pour entrer automatiquement une autorisation (d'entrer sur une piste), dans le système 1.

A la sous-étape E2B, dans un mode de réalisation préféré, une autorisation du contrôle aérien, émise par l'intermédiaire d'un message vocal à destination du pilote, est récupérée automatiquement par l'élément d'entrée automatique 17.

Pour ce faire, dans une réalisation préférée, l'élément d'entrée automatique 17 comporte, pour récupérer automatiquement une telle autorisation :
- au moins un algorithme usuel de transcription vocale (de type STT pour « Speech To Text » en anglais), basé sur l'intelligence artificielle. Cet algorithme de transcription vocale reçoit et traite les communications entrantes du contrôle aérien à destination du pilote, et transcrit, de façon usuelle, chaque message vocal d'un contrôleur aérien en un message textuel ; et
- au moins un algorithme usuel d'extraction d'informations, également basé sur l'intelligence artificielle. Cet algorithme d'extraction d'informations traite, de façon usuelle, les messages textuels (du contrôle aérien) générés par l'algorithme de transcription vocale, pour en extraire les informations d'autorisation d'entrer sur une piste. Les informations d'autorisation ainsi extraites sont ensuite communiquées à l'unité de vérification 11 via la liaison 13.

Dans une variante de réalisation, à la sous-étape E2B, l'élément d'entrée automatique 17 peut également comporter une liaison de transmission de données, à l'aide de laquelle une autorisation est transmise (de préférence automatiquement) au système 1 (et notamment à l'unité de vérification 11), par exemple à partir soit directement d'un système du contrôle aérien, soit d'un système de l'aéronef qui dispose de cette information.

En variante ou de préférence en complément des sous-étapes E2A et E2B, l'étape de réception de données E2 peut également comprendre une sous-étape E2C de détection automatique. Cette sous-étape E2C de détection automatique est mise en oeuvre par l'élément de détection automatique 18 (figure 1) dans le but de détecter un état allumé (lumière rouge) d'un indicateur lumineux C3 (figure 2) d'un point d'attente P1 d'une piste 3 de l'aérodrome 2. Comme indiqué ci-dessus, la détection d'un indicateur lumineux C3 allumé confirme l'absence d'une autorisation du contrôle aérien pour entrer sur la piste 2 associée. En revanche, l'absence de détection d'un indicateur lumineux C3 allumé ne fournit aucune indication sur une éventuelle autorisation d'entrée sur la piste 2 associée.

Par ailleurs, dans un mode de réalisation préféré, l'étape de surveillance E1 comprend une étape de détection optique E1A. Cette étape de détection optique E1A comprend :
- une sous-étape E1A1 de prise d'images, mise en oeuvre par le dispositif de prise d'images 21, pour prendre des images de l'environnement extérieur de l'aéronef AC ; et
- une sous-étape E1A2 de traitement d'images, mise en oeuvre par le dispositif de traitement d'image 22, pour traiter au moins certaines des images prises à ladite sous-étape E1A1 de prise d'images de manière à détecter le cas échéant un élément caractéristique relatif à un point d'attente, lorsque cet élément caractéristique est représenté sur au moins l'une des images traitées.

L'étape de détection optique E1 est mise en oeuvre pour détecter tous les éléments caractéristiques (visuels) qui sont situés au point d'attente.

Pour mettre en oeuvre cette détection optique, l'aéronef AC est équipé d'un ou de plusieurs dispositifs de prise d'images 21, à savoir de préférence des caméras, pour prendre (ou capturer) les images de l'environnement extérieur (à la sous-étape E1A1 de prise d'images) pendant le roulement de l'aéronef AC et fournir au dispositif de traitement d'images 22 les images capturées.

Les caméras peuvent être agencées à divers endroits sur l'aéronef AC où elles capturent la scène devant l'aéronef AC avec un champ de vision suffisant pour détecter les éléments caractéristiques, quelle que soit la trajectoire de l'aéronef AC à l'approche d'un point d'attente Pi (à savoir en ligne droite ou suivant une trajectoire courbe au cas où la voie de circulation comprend un virage avant d'atteindre le point d'attente).

De préférence, les emplacements les plus appropriés sont le carénage ventral (non visible sur les figures) de l'aéronef AC, le nez 26 de l'aéronef AC et les côtés 27A et 27 B (gauche et droite) du fuselage de l'aéronef AC, comme illustré sur la figure 2.

Dans une première variante de réalisation, la sous-étape E1A2 de traitement d'images met en oeuvre une technique utilisant de l'intelligence artificielle.

Dans cette première variante, un ou plusieurs algorithmes d'intelligence artificielle intégrés dans le dispositif de traitement d'images 22 utilisent une image comme entrée, et le cas échéant détectent et localisent une représentation de l'élément caractéristique dans l'image. Différentes approches d'intelligence artificielle peuvent être utilisées, y compris des techniques d'apprentissage automatique (« machine learning » en anglais) et/ou d'apprentissage profond (« deep learning » en anglais).

Dans un mode de réalisation préféré, dans lequel le dispositif de traitement d'images 22 est basé sur de l'intelligence artificielle utilisant un système d'apprentissage automatique (« machine learning »), le système d'apprentissage automatique utilise, pour l'apprentissage, des données collectées préalablement qui sont représentatives de situations variées et conformes à celles qui peuvent être rencontrées par un aéronef circulant sur un aérodrome. Pour ce faire, des caméras sont installées sur un ou plusieurs aéronefs. Ces caméras sont identiques à celles utilisées par le système 1 ou tout au moins présentent des caractéristiques techniques proches de celles utilisées par le système 1. De plus, ces caméras sont installées sur cet aéronef ou ces aéronefs aux mêmes emplacements, ou à des emplacements aussi proches que possible, que ceux des caméras du système 1. Des images sont prises lors du roulement sur des aérodromes de l'aéronef ou des aéronefs, ainsi équipés, et les images prises sont stockées. L'ensemble des images stockées sont ensuite collectées. Les prises d'images sont réalisées sur des aérodromes différents, pour des conditions de luminosité différentes et variées (par exemple le jour, la nuit, ...) et des conditions météorologiques différentes et variées (par exemple par temps de soleil, de pluie, de neige, ...) de manière à prendre en compte l'ensemble des principales situations et conditions susceptibles d'être rencontrées par un aéronef équipé du système 1. L'ensemble des images ainsi collectées sont utilisées par le système d'apprentissage de l'intelligence artificielle du dispositif de traitement d'images 22.

Différentes techniques de traitement à base d'intelligence artificielle peuvent fournir les informations recherchées. On peut citer, à titre d'illustration :
- une détection d'objet. Dans ce cas, si un élément caractéristique est représenté dans l'image, l'algorithme d'intelligence artificielle le détecte et le localise spatialement dans l'image. Ces opérations peuvent peut être réalisées en tenant compte notamment de la géométrie, la couleur, la symétrie, ..., avec des algorithmes d'apprentissage usuels et automatiques, ou être mises en oeuvre complètement par un algorithme d'apprentissage profond qui est préalablement entraîné afin de trouver les meilleures caractéristiques pour détecter les objets ;
- une segmentation de l'image. Dans ce cas, chaque pixel de l'image est classé comme faisant partie ou non d'un élément caractéristique, et si un élément caractéristique est représenté dans l'image, l'ensemble des pixels relatifs à cet élément caractéristique permettent de le détecter et le localiser.

Une telle approche à base d'intelligence artificielle peut également récupérer les informations textuelles de panneaux d'instructions de point d'attente, tels que le panneau d'instructions C4 de la figure 2, pour fournir au système 1 des informations sur la désignation de la piste et l'emplacement du point d'attente.

Dans une deuxième variante de réalisation, la sous-étape E1A2 de traitement d'images met en oeuvre une technique dite de traitement d'images.

On sait que les techniques de traitement d'images traitent les pixels de l'image, en utilisant des filtres et des techniques usuelles de traitement du signal, pour récupérer des points d'intérêt et des informations géométriques dans l'image afin de vérifier si un élément caractéristique est représenté dans l'image, et le cas échéant le localiser spatialement dans l'image.

En connaissant ainsi la position de la représentation de l'élément caractéristique dans l'image (grâce au traitement d'image mis en oeuvre à la sous-étape E1A2 de traitement d'images), et en prenant en compte des caractéristiques de calibration du dispositif de prise d'images 21, notamment une caméra, utilisé pour capturer l'image traitée, le système 1 et par exemple le dispositif de traitement de données 23 peuvent déterminer, de façon usuelle, la position relative de l'aéronef par rapport à l'élément caractéristique détecté, et ainsi par rapport au point d'attente associé. Comme caractéristiques de calibration du dispositif de prise d'images 21, le système 1 utilise notamment la position et l'orientation du dispositif de prise d'images 21 sur l'aéronef ainsi que des paramètres de prise d'images (ouverture, résolution, ...) du dispositif de prise d'images 21.

En outre, dans une troisième variante de réalisation, la sous-étape E1A2 de traitement d'images met en oeuvre, à la fois, une technique (telle que celle décrite ci-dessus) utilisant de l'intelligence artificielle et une technique de traitement d'images (telle que celle également décrite ci-dessus).

A chaque instant de prise d'image considéré, la ou les caméras prennent une nouvelle image qui est ensuite traitée. Ainsi, une trajectoire de l'aéronef est obtenue par la prise en compte des positions successives de l'aéronef par rapport à l'élément caractéristique.

Par ailleurs, l'étape de surveillance E1 comprend une étape de traitement de données E1B mise en oeuvre par le dispositif de traitement de données 23.

L'étape de traitement de données E1B réalise, de préférence, une consolidation de la position relative de l'aéronef par rapport au point d'attente, à partir le cas échéant de la détection de plusieurs éléments caractéristiques relatifs à ce point d'attente.

L'étape de traitement de données E1B, mise en oeuvre par le dispositif de traitement de données 23, comprend également les opérations suivantes :
- déterminer une enveloppe d'alerte courante dépendant au moins de la position relative courante de l'aéronef AC, telle que déterminée précédemment, et de paramètres de l'aéronef précisés ci-dessous ; et
- détecter une entrée future sur la piste si le point d'attente (tel que détecté) pénètre dans l'enveloppe d'alerte courante.

Dans un mode de réalisation particulier, trois niveaux d'alerte (ou de sécurité) sont prévus, à savoir dans l'ordre de déclenchement de l'alerte en cas de survenue d'une incursion sur une piste :
- une indication (« advisory » en anglais) qui est optionnelle ;
- un avertissement (« caution » en anglais) ; et
- une alarme (« warning » en anglais).

Une enveloppe d'alerte (ou de sécurité) A1, A2, A3 est déterminée pour chacun des niveaux d'alerte considérés. Plus précisément, dans le mode de réalisation particulier précité, comme représenté sur la figure 4 :
- l'enveloppe d'alerte A1 est déterminée pour l'indication ;
- l'enveloppe d'alerte A2 est déterminée pour l'avertissement ;
- l'enveloppe d'alerte A3 est déterminée pour l'alarme.

En cas d'absence d'autorisation d'entrer sur une piste, lorsque le point d'attente détecté entre dans l'une de ces différentes enveloppes d'alerte A1, A2, A3, l'alerte correspondante est déclenchée, comme précisé ci-dessous.

Dans un mode de réalisation préféré, représenté sur la figure 4, chaque enveloppe d'alerteA1, A2, A3 correspond à un demi-cercle projeté sur le sol, à l'avant de l'aéronef AC. Chaque enveloppe d'alerteA1, A2, A3 est centrée sur le nez 26 de l'aéronef AC et présente un rayon R1, R2, R3 particulier. Ce rayon R1, R2, R3 représente la distance relative entre le nez 26 de l'aéronef AC et un point d'attente à partir duquel l'alerte correspondante sera déclenchée (en cas d'absence d'autorisation d'entrer sur la piste correspondante).

Le rayon R1, R2, R3 est calculé en fonction d'un temps dit d'incursion. Le temps d'incursion est un temps prédéterminé. Il correspond à la durée que l'on laisse à l'aéronef pour atteindre le point d'attente avant de déclencher l'alerte correspondante. Il varie en fonction du niveau d'alerte. Plus précisément, plus le niveau d'alerte est élevé (c'est-à-dire avec un danger devenant plus imminent), plus le temps d'incursion est faible comme représenté sur la figure 4 pour les rayons R1, R2 et R3 correspondants. A titre d'illustration non limitative, il peut par exemple être de 3 ou 4 secondes pour le rayon R3, de 6 à 8 secondes pour le rayon R2, et de 12 à 15 secondes pour le rayon R1.

Le rayon R3 est calculé (par le dispositif de traitement de données 23) en fonction du temps d'incursion prédéterminé correspondant, en prenant en compte les paramètres suivants comprenant des paramètres de l'aéronef AC :
- la position relative de l'aéronef AC par rapport au point d'attente considéré ;
- des paramètres (vitesse, capacités de freinage) de l'aéronef AC ; et
- un éventuel ordre de décélération généré sur l'aéronef AC.

Quant aux rayons R2 et R1, ils sont calculés à partir du rayon R3 en prenant en compte, à chaque fois, un temps prédéterminé correspondant de réaction et de décision du pilote.

Par ailleurs, comme indiqué ci-dessus, l'étape de vérification E3, mise en oeuvre par l'unité de vérification 11, prévoit (en cas de détection à l'étape de surveillance E1 d'une entrée future sur une piste 3, 4) de vérifier si cette entrée future est autorisée ou non autorisée. Pour ce faire, l'étape de vérification E3 tient compte de la ou des autorisations d'entrée reçues le cas échéant à l'étape de réception de données E2. L'étape de vérification E3 déduit une incursion future si cette entrée future n'est pas autorisée.

Finalement, l'étape d'aide à l'évitement E4, mise en oeuvre par l'unité d'aide à l'évitement 14, réalise (dans le cas d'une incursion future déduite à l'étape de vérification E3) au moins une action destinée à aider à éviter (c'est-à-dire à empêcher) cette incursion future.

Pour ce faire, l'étape d'aide à l'évitement E4 comprend, généralement, tout d'abord, une sous-étape E4A d'émission d'un ou de plusieurs messages à destination du pilote dans le poste de pilotage de l'aéronef AC. Le ou les messages émis peuvent être un ou des messages d'alerte (alertant le pilote simplement de la situation) et/ou un ou des messages d'aide à la navigation au sol (donnant des indications ou des instructions au pilote pour remédier au risque d'incursion, par exemple en demandant au pilote de réaliser un freinage de l'aéronef AC).

Le dispositif d'émission de message 24 émet ce ou ces messages :
- sous forme visuelle, par exemple en affichant un message ou un signe sur un écran du poste de pilotage, notamment par l'intermédiaire d'un affichage usuel de type « tête haute », ou en émettant un signal lumineux ; et/ou
- sous forme sonore, par exemple à l'aide d'un haut-parleur et/ou d'une sirène installés dans le poste de pilotage.

Dans un mode de réalisation particulier, dans le cas où l'autorisation a été entrée dans le système 1 (à partir d'une entrée du pilote ou d'une récupération automatique) mais qu'un indicateur lumineux est allumé (n'autorisant ainsi pas l'entrée sur la piste), le message d'alerte est adapté afin que le pilote comprenne pourquoi le système 1 déclenche l'alerte d'incursion.

Bien entendu, si après l'émission d'un message d'alerte à l'étape d'aide à l'évitement E4, une autorisation (d'entrer sur la piste) est fournie au système 1, l'alerte correspondante est levée et le message d'alerte n'est plus émis.

Chaque message d'alerte émis dépend du niveau d'alerte considéré, parmi les niveaux d'alerte possibles, et notamment parmi les trois niveaux d'alerte décrits ci-dessus. A titre d'illustration, pour ces trois niveaux d'alerte, le dispositif d'émission de message 24 peut émettre les messages suivants :
- pour une indication (« advisory » en anglais), un message visuel ;
- pour un avertissement (« caution » en anglais), des messages visuels et sonores ; et
- pour une alarme (« warning » en anglais), des messages visuels et sonores. De plus, si nécessaire, une sous-étape E4B de freinage automatique est déclenchée.

De préférence, pour ces trois niveaux d'alerte, le dispositif d'émission de message 24 émet le messages suivants :
- le message relatif à une indication (« advisory » en anglais), à partir du moment le point d'attente détecté entre dans l'enveloppe d'alerte A1 (relative à un temps d'incursion compris, par exemple, entre 12 et 15 secondes) et ceci jusqu'au moment où le point d'attente détecté entre dans l'enveloppe d'alerte A2 (ou ressort de l'enveloppe d'alerte A1) ;
- le ou les messages relatifs à un avertissement (« caution » en anglais), à partir du moment le point d'attente détecté entre dans l'enveloppe d'alerte A2 (relative à un temps d'incursion compris, par exemple, entre 6 et 8 secondes) et ceci jusqu'au moment où le point d'attente détecté entre dans l'enveloppe d'alerte A3 (ou ressort de l'enveloppe d'alerte A2) ; et
- le ou les message relatifs à une alarme (« warning » en anglais), à partir du moment le point d'attente détecté entre dans l'enveloppe d'alerte A3 (relative à un temps d'incursion compris, par exemple, entre 3 et 4 secondes) et tant qu'il reste dans cette l'enveloppe d'alerte A3.

Le message d'alerte émis étant à chaque fois adapté à la situation courante, de possibles passages d'un message d'alerte à un autre message d'alerte peuvent se présenter au cours du temps.

De préférence, le système 1 applique un hystérésis sur le passage de l'émission d'un premier message d'alerte à l'émission d'un second message d'alerte, pour éviter un éventuel changement trop dynamique et donc des apparitions et disparitions de messages d'alerte, potentiellement nuisibles pour le pilote. Par exemple, si le passage d'un premier message d'alerte (par exemple relatif à une indication ou à un avertissement) à un second message d'alerte (par exemple relatif à un avertissement ou à une alarme) concernant un niveau d'alerte plus élevé que le premier message d'alerte, est mis en oeuvre pour un temps d'incursion t0, le retour, c'est-à-dire le passage ultérieur du second message d'alerte au premier message d'alerte, sera mis en oeuvre pour un temps d'incursion t1 plus élevé que ce temps d'incursion t0.

Par ailleurs, dans un mode de réalisation particulier, lorsque le pilote réalise un freinage (qui généralement n'est pas linéaire et parfait) de l'aéronef, le système 1 vérifie si le freinage est suffisant pour arrêter l'aéronef avant une incursion de piste. Si le freinage est suffisant, aucun message d'alerte n'est émis. En revanche, si le freinage est insuffisant ou si le pilote arrête son freinage, les actions requises par la situation sont mises en oeuvre (émission de message d'alerte et/ou freinage automatique).

La sous-étape E4B réalise un freinage automatique de l'aéronef, qui est mis en oeuvre par le dispositif de freinage 25. Pour ce faire, dans un mode de réalisation particulier, le dispositif de freinage 25 envoie automatiquement un ordre de freinage à un système de freinage usuel de l'aéronef AC, et ceci de préférence jusqu'à l'arrêt complet de l'aéronef AC.

Par conséquent, si à la suite des alertes d'indication, d'avertissement et d'alarme, le pilote ne prend pas les mesures appropriées, le système 1 déclenche une action de récupération, à savoir un ordre de freinage automatique approprié est calculé et fourni au système de freinage de l'aéronef AC pour l'arrêter et ainsi empêcher une incursion sur la piste.

Cette sous-étape E4B génère donc automatiquement un freinage de l'aéronef, et ceci en cas d'absence d'action appropriée du pilote après l'émission de messages. Cette sous-étape E4B met en oeuvre une protection en dernier ressort et permet notamment d'éviter les conséquences que pourraient avoir une erreur ou une incapacité du pilote.

Dans un cas particulier, si les conditions nécessaires sont remplies, cette sous-étape E4B peut être mise en oeuvre, même si la sous-étape E4A n'a pas été préalablement mise en oeuvre.

Le système 1 et le procédé P, tels que décrits ci-dessus, présentent de nombreux avantages. En particulier :
- ils sont en mesure de détecter automatiquement une incursion future ou incursion potentielle (c'est-à-dire une entrée future non autorisée) sur une piste par l'aéronef équipé du système 1 ;
- ils sont en mesure d'apporter une aide au pilote de l'aéronef pour éviter l'incursion dans une telle situation ;
- cette aide consiste, tout d'abord, à sensibiliser le pilote sur la situation effective (à l'aide d'un ou de plusieurs messages d'alerte et/ou d'aide à la navigation au sol) ;
- cette aide permet notamment de fournir au pilote un niveau d'alerte pertinent en fonction d'un temps d'incursion prédéterminé ;
- cette aide comprend également une protection en dernier ressort ou dernier recours (en mettant en oeuvre un freinage automatique) en particulier pour pallier une erreur ou une incapacité du pilote ; et
- les traitements mis en oeuvre, notamment concernant la détection optique, peuvent utiliser des techniques d'intelligence artificielle et sont particulièrement précis.

## Revendications

1. Procédé d'aide à l'évitement d'une incursion sur une piste d'un aérodrome par un aéronef roulant sur l'aérodrome, ledit procédé comportant au moins les étapes suivantes :
- une étape de surveillance (E1), mise en oeuvre par une unité de surveillance (9), au moins pour surveiller l'aérodrome (2) de manière à pouvoir détecter par l'intermédiaire d'une détection optique un ou plusieurs éléments caractéristiques (C1, C2, C3, C4, C5) comprenant un élément caractéristique (C1) obligatoire correspondant à un marquage d'arrêt au sol, ledit ou lesdits éléments caractéristiques (C1, C2, C3, C4, C5) étant relatifs à un point d'attente (P1, P2, P3) d'une piste (3, 4) de l'aérodrome (2), pour déterminer une position relative courante de l'aéronef (AC) par rapport à un point d'attente (P1, P2, P3) pour lequel au moins l'élément caractéristique (C1) obligatoire a été détecté, et pour détecter le cas échéant une entrée future sur ladite piste (3) de l'aérodrome (2) par l'aéronef (AC) en fonction au moins de cette position relative courante et de paramètres de l'aéronef (AC), l'étape de surveillance (E1) comprenant une étape de traitement de données (E1B) mise en oeuvre au moins pour déterminer au moins une enveloppe d'alerte courante (A1, A2, A3) correspondant à un temps dit d'incursion, et dépendant au moins de ladite position relative courante de l'aéronef et desdits paramètres de l'aéronef, et pour détecter une entrée future sur une piste (3, 4) si l'enveloppe d'alerte courante (A1, A2, A3) atteint un point d'attente (P1, P2, P3) pour lequel au moins l'élément caractéristique (C1) obligatoire a été détecté ;
- une étape de réception de données (E2), mise en oeuvre par une unité de réception de données (10), au moins pour recevoir au moins une autorisation d'entrée sur une piste (3, 4) ;
- une étape de vérification (E3), mise en oeuvre par une unité de vérification (11), au moins pour, en cas de détection à l'étape de surveillance (E1) d'une entrée future sur la piste (3, 4), vérifier si cette entrée future est autorisée ou non autorisée, en tenant compte de la ou des autorisations d'entrée reçues le cas échéant à l'étape de réception de données (E2), et pour déduire, si cette entrée future n'est pas autorisée, une incursion future ; et
- une étape d'aide à l'évitement (E4), mise en oeuvre par au moins une unité d'aide à l'évitement (14), au moins pour, dans le cas d'une incursion future déduite à l'étape de vérification (E3), mettre en oeuvre au moins une action destinée à aider à éviter ladite incursion future.

2. Procédé selon la revendication 1,
**caractérisé en ce que** l'étape de réception de données (E2) comprend au moins l'une des sous-étapes suivantes :
- une sous-étape (E2A) d'entrée manuelle d'au moins une autorisation d'entrée sur une piste (3, 4), par un pilote de l'aéronef (AC) ; et
- une sous-étape (E2B) d'entrée automatique d'au moins une autorisation d'entrée sur une piste (3, 4).

3. Procédé selon l'une des revendications 1 et 2,
**caractérisé en ce que** l'étape de réception de données (E2) comprend une sous-étape (E2C) de détection automatique d'un état allumé d'au moins un indicateur lumineux (C3) associé à un marquage d'arrêt au sol d'un point d'attente (P1) d'une piste (3) de l'aérodrome (2).

4. Procédé selon l'une quelconque des revendications précédentes,
**caractérisé en ce que** l'étape de surveillance (E1) comprend pour la mise en oeuvre de la détection optique :
- une sous-étape (E1A1) de prise d'images de l'environnement extérieur de l'aéronef (AC) ; et
- une sous-étape (E1A2) de traitement d'au moins certaines des images prises à ladite sous-étape de prise d'images (E1A1) de manière à détecter le cas échéant un élément caractéristique (C1, C2, C3, C4, C5) relatif à un point d'attente (P1, P2, P3), lorsque cet élément caractéristique (C1, C2, C3, C4, C5) est représenté sur au moins l'une des images traitées.

5. Procédé selon la revendication 4,
**caractérisé en ce que** la sous-étape (E1A2) de traitement d'images met en oeuvre au moins l'une des techniques suivantes :
- une technique utilisant de l'intelligence artificielle ;
- une technique de traitement d'images.

6. Procédé selon l'une quelconque des revendications précédentes,
**caractérisé en ce que** ledit ou lesdits éléments caractéristiques relatifs à un point d'attente (P1, P2, P3) comprennent, en plus de l'élément caractéristique (C1)obligatoire, au moins l'un des éléments caractéristiques auxiliaires suivants :
- un marquage (C2, C5) au sol ;
- un indicateur lumineux (C3) ;
- un marquage ou un panneau d'instructions (C4).

7. Procédé selon l'une quelconque des revendications précédentes,
**caractérisé en ce que** chaque enveloppe d'alerte (A1, A2, A3) correspond à un demi-cercle projeté sur le sol à l'avant de l'aéronef (AC), centré sur le nez (26) de l'aéronef (AC) et présentant un rayon calculé en fonction du temps d'incursion prédéterminé correspondant, en prenant en compte au moins les paramètres suivants : la position relative de l'aéronef (AC) par rapport au point d'attente considéré et lesdits paramètres de l'aéronef (AC).

8. Procédé selon l'une quelconque des revendications précédentes,
**caractérisé en ce que** l'étape de traitement de données (E1B) détermine une pluralité d'enveloppes d'alerte courantes (A1, A2, A3), ces enveloppes d'alerte courantes (A1, A2, A3) correspondant à des temps d'incursion différents.

9. Procédé selon la revendication 8,
**caractérisé en ce que** l'étape d'aide à l'évitement (E4) émet un premier message d'alerte associé à un premier type d'enveloppe d'alerte si l'enveloppe d'alerte courante (A1, A2, A3) correspondante atteint le point d'attente et émet, à la place de ce premier message d'alerte, un second message d'alerte associé à un second type d'enveloppe d'alerte relatif à un niveau d'alerte plus élevé si l'enveloppe d'alerte courante (A1, A2, A3) correspondante atteint le point d'attente, le passage de l'émission entre le premier message d'alerte et le second message d'alerte est mis en oeuvre avec un hystérésis.

10. Procédé selon l'une quelconque des revendications précédentes,
**caractérisé en ce que** l'étape d'aide à l'évitement (E4) est mise en oeuvre au moins pour émettre au moins l'un des messages suivants : un message d'alerte, un message d'aide à la navigation au sol, ledit message étant émis sous au moins l'une des formes suivantes : visuelle, sonore.

11. Procédé selon l'une quelconque des revendications précédentes,
**caractérisé en ce que** l'étape d'aide à l'évitement (E4) est mise en oeuvre au moins pour générer automatiquement un freinage de l'aéronef (AC), au moins en cas d'absence d'action appropriée du pilote après l'émission d'au moins un message.

12. Système d'aide à l'évitement d'une incursion sur une piste d'un aérodrome par un aéronef roulant sur l'aérodrome,
**caractérisé en ce qu'**il comporte au moins :
- une unité de surveillance (9) configurée pour surveiller l'aérodrome (2) de manière à pouvoir détecter par l'intermédiaire d'une détection optique un ou plusieurs éléments caractéristiques (C1, C2, C3, C4, C5) comprenant un élément caractéristique (C1) obligatoire correspondant à un marquage d'arrêt au sol, ledit ou lesdits éléments caractéristiques (C1, C2, C3, C4) étant relatifs à un point d'attente (P1, P2, P3) d'une piste (3, 4) de l'aérodrome (2), pour déterminer une position relative courante de l'aéronef (AC) par rapport à un point d'attente (P1, P2, P3) pour lequel au moins l'élément caractéristique (C1) obligatoire a été détecté, et pour détecter le cas échéant une entrée future sur ladite piste (3, 4) de l'aérodrome (2) par l'aéronef (AC) en fonction au moins de cette position relative courante et de paramètres de l'aéronef (AC), l'unité de surveillance (9) comprenant un dispositif de traitement de données (23) configuré au moins pour déterminer au moins une enveloppe d'alerte courante (A1, A2, A3) correspondant à un temps dit d'incursion, et dépendant au moins de ladite position relative courante de l'aéronef et desdits paramètres de l'aéronef, et pour détecter une entrée future sur une piste (3, 4) si l'enveloppe d'alerte courante (A1, A2, A3) atteint un point d'attente (P1, P2, P3) pour lequel au moins l'élément caractéristique (C1) obligatoire a été détecté ;
- une unité de réception de données (10) configurée pour recevoir au moins une autorisation d'entrée sur une piste (3, 4) ;
- une unité de vérification (11), configurée pour, en cas de détection par l'unité de surveillance (9) d'une entrée future sur la piste, vérifier si cette entrée future est autorisée ou non autorisée, en tenant compte de la ou des autorisations d'entrée reçues le cas échéant par l'unité de réception de données (10), et pour déduire, si cette entrée future n'est pas autorisée, une incursion future ; et
- au moins une unité d'aide à l'évitement (14) configurée pour, dans le cas d'une incursion future déduite par l'unité de vérification (11), mettre en oeuvre au moins une action destinée à aider à éviter ladite incursion future.

13. Aéronef,
**caractérisé en ce qu'**il comporte au moins un système (1) selon la revendication 12.
